# EUROPÄISCHE PATENTANMELDUNG

(11) **EP 1 111 849 A2**
(43) Veröffentlichungstag der Anmeldung: **27.06.2001**
(21) Anmeldenummer: 00127171.7
(22) Anmeldetag: 12.12.2000
(51) Int. Cl.: H04L 12/413

(54) **Verfahren zur Steuerung eines Zugriffswettbewerbs auf einem Bussystem**

(30) Priorität: 17.12.1999 DE 19960974
(71) Anmelder: Tenovis GmbH & Co. KG, 60326 Frankfurt (DE)
(72) Erfinder: Roessler, Georg, Dr., 60489 Frankfurt (DE); Schmidt, Werner, Dipl.-Ing., 63762 Grossostheim (DE)
(74) Vertreter: Bohnenberger, Johannes, Dr.

(57) **Zusammenfassung**

Es wir ein Verfahren zur Steuerung eines Zugriffswettbewerbs auf einem Bussystem (1) vorgeschlagen, das dazu dient, einen gerechten Zugriffswettbewerb zu ermöglichen. Das Verfahren umfaßt die Verwendung eines Zählers für jede Station, wobei der Zähler einen Kredit angibt, den die Station für eine Datenübertragung verwendet. Erreicht der Zähler den Wert Null, wird die entsprechende Station aus dem Zugriffswettbewerb ausgeschlossen. Für eine im Zugriffswettbewerb erfolgreiche Station wird der Zähler um einen Betrag dekrementiert, der sich nach einer Dienstklasse der zu übertragenden Daten richtet. Sind alle Zähler einer an das Bussystem (1) angeschlossenen Station (2, 4, 6) auf Null gesunken, werden alle Zähler auf ihren Anfangswert gesetzt. Nimmt an einem Zugriffswettbewerb keine Station teil, werden die Zähler der Stationen auf ihren Anfangswert gesetzt, die einen Zähler mit einem Wert von Null aufweisen. Die Daten werden über das Bussystem (1) in Rahmen übertragen, und pro Rahmen wird ein Zugriffs-wettbewerb durchgeführt. Die Zahl der Daten einer niedrig priorisierten Dienstklasse wird für eine Übertragung begrenzt. Weiterhin wird der Zugriffswettbewerb in mehreren Schritten durchgeführt.

## Beschreibung

### Stand der Technik

Die Erfindung geht aus von einem Verfahren zur Steuerung eines Zugriffswettbewerbs auf einem Bussystem nach der Gattung des unabhängigen Patentanspruchs.

Es ist bereits aus der Offenlegungsschrift DE 430487 A1 bekannt, daß ein Verfahren zur Beschleunigung des Zugriffswettbewerbs für eine an ein Bussystem angeschlossene Station in Vermittlungseinrichtungen mittels Wettbewerbsnummern implementiert werden kann. Die Wettbewerbsnummern werden ganz oder teilweise auf mehrere Zugriffsleitungen geschaltet. Eine an das Bussystem angeschlossene Station stellt fest, ob eine sich auf den Zugriffsleitungen befindliche Wettbewerbsnummer größer oder kleiner als die von ihr gesendete Wettbewerbsnummer ist. Ist sie größer, wird die entsprechende Station sofort aus dem Zugriffswettbewerb ausgeschlossen.

### Vorteile der Erfindung

Das erfindungsgemäße Verfahren mit den Merkmalen des unabhängigen Patentanspruchs hat demgegenüber den Vorteil, daß mittels eines Zählers ein Kreditmechanismus an jeder an das Bussystem angeschlossenen Station installiert wird, der zu einem gerechteren Zugriffswettbewerb auf dem Bussystem führt.

Insbesondere ist es von Vorteil, daß Daten einer Dienstklasse hoher Priorität zu einer geringeren Dekrementierung des Zählers führen als Daten einer Dienstklasse mit niedrigerer Priorität. Dies führt dazu, daß Stationen mit hoch priorisierten Daten die Möglichkeit haben, an mehr Zugriffswettbewerben teilzunehmen und sie zu gewinnen.

Der Kreditmechanismus sorgt jedoch auch dafür, daß auch niedrig priorisierte Daten über das Bussystem vermittelt werden, wenn z.B. die Zähler von Stationen, die hoch priorisierte Daten versenden, auf Null gesunken sind. Es ist damit sichergestellt, daß niedrig priorisierte Daten auch vermittelt werden. Da niedrig priorisierte Daten eine größere Toleranz gegenüber Verzögerungszeiten aufweisen, können diese Daten länger auf ihre Vermittlung warten.

Besonders vorteilhaft ist, daß, wenn alle Zähler den Wert Null erreicht haben, die Zähler wieder ihren ursprünglichen Wert erhalten, so daß die Stationen wieder an Zugriffswettbewerben teilnehmen können. Diese Art des Zurücksetzens des Zählers sorgt vorteilhafterweise dafür, daß alle Stationen mit ihrem Zähler, der einen positiven Wert hat, an Zugriffswettbewerben erfolgreich teilnehmen können. Damit kommen auch solche Stationen zum Gewinnen von Zugriffswettbewerben und somit zum Versenden ihrer Daten, die nur wenig senden und dabei auch noch niedrig priorisierte Daten zum Versenden haben. Stationen, die viel senden und/oder einen Zähler mit dem Wert Null aufweisen, müssen daher warten, bis sich Situationen einstellen, in denen ihre Zähler wieder auf den ursprünglichen Wert zurückgesetzt werden.

Weiterhin ist es von Vorteil, daß, wenn keine Station an einem Zugriffswettbewerb teilnehmen möchte, die Zähler der Stationen, die bereits den Wert Null erreicht haben und daher nicht mehr an Zugriffswettbewerben teilnehmen können, auf ihre Anfangswerte zurückgesetzt werden, so daß dann wieder eine gleichmäßige Auslastung des Bussystems durch solche Stationen ermöglicht wird, deren Zähler bereits den Wert Null erreicht hatte. Es ist anzunehmen, daß die Stationen, deren Zähler den Wert Null ausweisen, zu solchen Stationen zählen, die stark ausgelastet sind und mehr Daten über das Bussystem zu versenden haben, als die Stationen, die noch einen Zähler mit einem positiven Wert aufweisen. Stationen, die wenig zu versenden haben, weisen länger einen Zähler mit einem positiven Wert auf. Daher ist es vorteilhaft, auch die Auslastung des Bussystems implizit für das Zurücksetzen der Zähler zu berücksichtigen. Damit entsteht ein quasi selbstregulierendes System.

Durch die in den abhängigen Ansprüchen aufgeführten Maßnahmen sind vorteilhafte Weiterbildungen und Verbesserungen des im unabhängigen Patentanspruchs angegebenen Verfahrens zur Steuerung eines Zugriffswettbewerbs auf einem Bussystem möglich.

Es ist von Vorteil, daß pro Rahmen, der auf dem Bussystem übertragen wird, ein Zugriffswettbewerb durchgeführt wird, so daß weiterhin eine zeitliche Fairneß ermöglicht wird, wenn in solchen Zeiten, in denen Stationen, die normalerweise hoch priorisierte Daten übertragen keine Daten übertragen, daß dann Stationen mit niedrig priorisierten Daten in diesen Zeiten Zugriffswettbewerbe gewinnen und ihre Daten über das Bussystem weiter vermitteln.

In einer Weiterbildung der Erfindung ist vorgesehen, daß niedrig priorisierte Daten nur in einer begrenzten Menge über das Bussystem übertragen werden, so daß ein niedrig priorisierter Datenstrom das Bussystem nur für eine begrenzte Zeit für andere an das Bussystem angeschlossene Stationen blockiert. Damit wird vorteilhafterweise erreicht, daß hoch priorisierte Daten nur für eine begrenzte Zeit blockiert werden.

### Zeichnung

Ausführungsbeispiele der Erfindung sind in der Zeichnung dargestellt und in der nachfolgenden Beschreibung näher erläutert.

Es zeigen
Figur 1 ein Bussytem mit angeschlossenen Stationen und
Figur 2 das erfindungsgemäße Verfahren zur Steuerung eines Zugriffswettbewerbs auf einem Bussystem.

### Beschreibung

Vermittlungseinrichtungen für z.B. ATM (Asynchronous Transfer Mode) weisen ein Bussystem auf, über das angeschlossene Stationen, die mit Datenleitungen verbunden sind, auf denen Daten zu der Vermittlungseinrichtung übertragen werden und von der Vermittlungseinrichtung versendet werden, diese Daten zwischen den Stationen übertragen. Die Daten werden also vermittelt. Da auf solch einem Bussystem zu einem Zeitpunkt nur eine Station Daten übertragen kann, wird mittels eines Zugriffswettbewerbs ermittelt, welche Station sendeberechtigt ist. Die Sendeberechtigung richtet sich nach einer Priorität der Daten, die zu übertragen sind. Es gibt verschiedene Arten von Daten, die je nach ihrer Übertragungsart verschiedene Prioritäten zugewiesen bekommen. Bei ATM gibt es verschiedene Dienstklassen, die unterschiedliche Prioritäten aufweisen.

Dienstklassen für ATM sind definiert als
1. CBR (Constant Bit Rate = Konstante Übertragungsrate) : Die CBR-Klasse ist für Echtzeitanwendungen gedacht, das sind solche Datenübertragungen, die anfällig für Verzögerungen sind. Daher ist diese Dienstklasse für Sprach- und Videodaten besonders geeignet. Für diese Dienstklasse ist eine dauernde Verfügbarkeit einer festen Bandbreite eine Vorbedingung. Allerdings können auch bei CBR Datenpakete mit niedriger Priorität eingestuft sein, wenn ihre Bedeutung für die Anwendung als gering eingestuft wird.
2. Echtzeit-VBR (Variable Bit Rate = Variable Übertragungsrate) : Der Echtzeit-VBR ist für Echtzeitanwendungen wie Sprach- und Videoübertragung geeignet. Die Datenquellen werden hierbei derart angenommen, daß sie mit Übertragungsraten arbeiten, die unterschiedlich in Abhängigkeit von der Zeit sind. Man kann diese Datenquellen also als mit Datenbursts arbeitend beschreiben. Datenpakete, die über einen vorgegebenen Wert hin verzögert werden, werden als wenig bedeutend für die Anwendung eingestuft.
3. Nichtechtzeit-VBR: Diese Dienstklasse ist für Nichtechtzeitanwendungen gedacht ist, wobei dieser Datenverkehr auch in Datenbursts geschieht.
4. UBR (Unspecified Bit Rate = nichtspezifizierte Übertragungsrate): Der UBR ist für verzögerungstolerante Anwendungen gedacht, die keine engen Anforderungen an Zeitverzögerungen haben. Dazu gehört der klassische Datenverkehr. Datenquellen werden hierbei einen nicht kontinuierlichen Datenstrom liefern.
5. ABR (Available Bit Rate = verfügbare Übertragungsrate):
   Viele Anwendungen haben die Eigenschaft, ihre
   Übertragungsrate zu reduzieren, wenn ein
   Kommunikationsnetz es aufgrund eines hohen Aufkommens an zu übertragenden Datenpaketen verlangt. In der gleichen
   Weise mag es für diese Anwendungen erforderlich sein, ihre Übertragungsrate zu steigern, wenn zusätzliche
   Bandbreite innerhalb des Kommunikationsnetzes verfügbar ist.

Es ist daher klar, daß Datenpakete, die mit CBR übertragen werden, eine höhere Priorität genießen als solche, die mit anderen Dienstklassen übertragen werden. Bei den Zugriffswettbewerben wird die unterschiedliche Priorität berücksichtigt.

Es ergibt sich daher die Aufgabe, Zugriffswettbewerbe in Vermittlungseinrichtungen mit einem Bussystem für ATM-Daten so zu gestalten, daß sie optimal für hoch priorisierte Daten sind, aber dennoch ein Maß an Fairneß für niedrig priorisierte Daten aufweisen.

Erfindungsgemäß wird daher ein Kreditmechanismus verwendet, der dazu dient, einen gerechten Zugriffswettbewerb auf dem Bussystem sicherzustellen. Will eine Station senden, muß sie ebenso signalisieren, daß sie noch einen Zähler von größer Null aufweist, also noch Kredit hat, um Daten übertragen zu können, da pro Datenübertragung der Zähler dekrementiert wird, der Kredit also reduziert wird.

Der Zähler wird für hoch priorisierte Daten, falls der Zugriffswettbewerb gewonnen wird, geringer dekrementiert als für niedrig priorisierte Daten. Dies führt dazu, daß eine Station, die beispielsweise nur hoch priorisierte Daten weitervermittelt, mit einem vorgegebenen Zählerstand viel mehr Zugriffswettbewerbe gewinnen kann und dementsprechend Datenübertragungen durchführt als eine Station, die allein niedrig priorisierte Daten überträgt. Darüber hinaus sind verschiedene Mechanismen für das Zurücksetzen der Zähler vorgesehen.

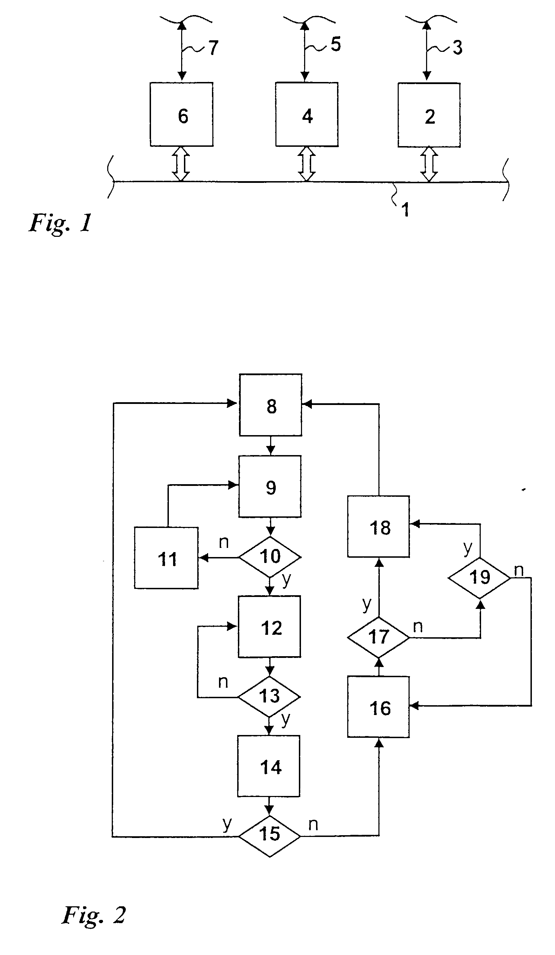

In Figur 1 ist ein Bussystem 1 mit angeschlossenen Stationen 2, 4 und 6 dargestellt. Die Station 2 ist mit einem ersten Datenein-/ausgang an das Bussystem 1 angeschlossen. Über einen zweiten Datenein-/ausgang ist die Station 2 mit einer Datenleitung 3 verbundene. Die Stationen 4 und 6 sind ebenfalls über ihre jeweils ersten Datenein-/ausgänge mit dem Bussystem 1 verbunden und jeweils mit ihren zweiten Datenein-/ausgängen mit den Datenleitungen 5 und 7. Das Bussystem 1 mit den angeschlossenen Stationen bildet eine Vermittlungseinrichtung. Die Datenleitungen 3, 5 und 7 sind an die Vermittlungseinrichtung angeschlossen. Daten, die von der Datenleitung 3 in die Vermittlungseinrichtung versendet werden, sollen beispielsweise entweder auf die Datenleitung 5 oder 7 weitervermittelt werden.

In Figur 2 ist das erfindungsgemäße Verfahren zur Steuerung eines Zugriffswettbewerbs auf dem Bussystem 1 dargestellt. In Verfahrensschritt 8 wird festgestellt, ob eine der Stationen 2, 4 oder 6 Daten über die jeweils angeschlossene Datenleitung empfängt. Ist das nicht der Fall, wird in Verfahrensschritt weiter gewartet, bis Daten empfangen werden. Sind dann Daten empfangen worden, dann werden die Adressen der Daten und ihre Priorität ausgewertet, so daß dann in Verfahrensschritt 9 die Station entscheidet, an einem Zugriffswettbewerb teilzunehmen, sofern ihr Zähler einen Kredit von größer Null aufweist. Dies signalisiert die Station auch über das Bussystem 1 und zwar über eine gemeinsam benutzte Anzeige, die entweder besagt, daß keine Station einen Zähler von größer Null zum Senden hat, oder daß mindestens eine noch einen Zähler von größer Null aufweist.

In Verfahrensschritt 10 wird überprüft, ob noch ein Zählerstand von größer Null vorliegt. Ist das der Fall, wird in Verfahrensschritt 12 an einem Zugriffswettbewerb teilgenommen. Ist der Zähler jedoch gleich Null, wird nach Verfahrensschritt 10 in Verfahrensschritt 11 darauf gewartet, daß der Zähler wie unten dargestellt, auf den ursprünglichen Wert zurückgesetzt wird. Diese Überprüfung des Zählerstands wird nur bei dem erstmaligen Durchlaufen des Verfahrens durchgeführt. Danach wird der Zählerstand, wie unten dargestellt, an einer anderen Stelle überprüft.

Nach Verfahrensschritt 12 wird in Verfahrensschritt 13 überprüft, ob der Zugriffswettbewerb erfolgreich für die betreffende Station war oder nicht. War er nicht erfolgreich, wird zu Verfahrensschritt 12 zurückgesprungen und am nächsten Zugriffswettbewerb teilgenommen.

War der Zugriffswettbewerb erfolgreich, wird in Verfahrensschritt 14 die Übertragung der Daten vorgenommen und der Zähler entsprechend der Dienstklasse der Daten, die übertragen werden, dekrementiert. In Verfahrensschritt 15 wird dann überprüft, ob der Zähler immer noch größer Null ist. Ist das der Fall, wird zurück zu Verfahrensschritt 8 gesprungen, um das Verfahren neu zu beginnen, um auf den Empfang von weiteren Daten zu warten.

Ist der Zähler jedoch gleich Null, wird nach Verfahrensschritt 15 in Verfahrensschritt 16 gewartet, um dann in Verfahrensschritt 17 festzustellen, ob kein Wettbewerb für einen Rahmen stattfindet. Ist das der Fall, wird in Verfahrensschritt 18 der Zähler zurückgesetzt, und zwar auf seinen ursprünglichen Wert. Ist das jedoch nicht der Fall, wird in Verfahrensschritt 19 überprüft, ob alle Zähler aller an das Bussystem 1 angeschlossenen Stationen auf Null abgesunken sind, d.h. keine Station signalisiert mehr einen positiven Zähler. Ist das der Fall, wird in Verfahrensschritt 18 der Zähler zurückgesetzt. Ist das nicht der Fall, wird zu Verfahrensschritt 16 zurückgesprungen, um weiter zu warten. Ist der Zähler in Verfahrensschritt 18 dann zurückgesetzt worden, wird zu Verfahrensschritt 8 zurückgesprungen, um das Verfahren erneut zu beginnen.

## Patentansprüche

1. Verfahren zur Steuerung eines Zugriffswettbewerbs auf einem Bussystem (1), wobei mehrere Stationen (2, 4, 6) an das Bussystem (1) angeschlossen werden, wobei während des Zugriffswettbewerbs durch mindestens eine Station (2, 4, 6) ihre Wettbewerbsnummer auf das Bussystem (1) geschaltet wird, wobei durch jede Station (2, 4, 6) ermittelt wird, ob eine gesendete Wettbewerbsnummer eine kleinere Wertigkeit als eine auf dem Bussystem (1) befindliche Codierung aufweist, wobei in diesem Fall eine zu der gesendeten Wettbewerbsnummer gehörige Station aus dem Zugriffswettbewerb ausscheidet, dadurch gekennzeichnet, daß jeder an das Bussystem (1) angeschlossenen Station (2, 4, 6) ein Zähler zugeordnet wird, daß eine Station (2, 4, 6) aus dem Zugriffswettbewerb ausgeschlossen wird, wenn ihr Zähler den Wert Null erreicht, daß von einer Station (2, 4, 6) eine Signalisierung erzeugt wird, für den Fall daß die Station (2, 4, 6) noch einen Zähler mit einem positiven Wert ausweist, daß für eine im Zugriffswettbewerb erfolgreiche Station ihr Zähler um einen Betrag dekrementiert wird, der sich nach einer Dienstklasse von zu übertragenden Daten richtet, und daß die Zähler, die den Wert Null erreicht haben, auf ihren Anfangswert zurückgesetzt werden, falls keine Signalisierung einer Station (2, 4,6) vorliegt oder falls keine Station an einem Zugriffswettbewerb teilnimmt.

2. Verfahren nach Anspruch 1, dadurch gekennzeichnet, daß die Daten über das Bussystem (1) in Rahmen übertragen werden, daß pro Rahmen ein Zugriffswettbewerb durchgeführt wird, sofern mindestens eine Station (2, 4, 6) daran teilnimmt.

3. Verfahren nach Anspruch 2, dadurch gekennzeichnet, daß die Zahl von Daten einer niedrig priorisierten Dienstklasse, die von einer Station übertragen werden, begrenzt wird.

4. Verfahren nach Anspruch 3, dadurch gekennzeichnet daß der Zugriffswettbewerb in mehreren Schritten durchgeführt wird.
